# EUROPEAN PATENT APPLICATION

(11) **EP 4 257 228 A1**
(43) Date of publication of application: **11.10.2023**
(21) Application number: 22305450.3
(22) Date of filing: 04.04.2022
(51) Int. Cl.: B01D 59/08, B01D 9/00, C01B 6/04

(54) **ISOTOPIC SEPARATION OF LITHIUM**

(71) Applicant: Renaissance Fusion, 38600 Fontaine (FR)
(72) Inventor: VOLPE, Francesco, 38600 Fontaine (FR)
(74) Representative: Cabinet Beaumont

(57) **Abstract**

The present disclosure relates to a method for isotopic separation of lithium, the method comprising:
- providing a first mixture (104) comprising at least lithium, lithium hydride, and possibly lithium deuteride and/or lithium tritide, the first mixture being at a first temperature;
- a first cooling step (110), preferably a uniform cooling, adapted to cooling the first mixture at a second temperature lower than the first temperature; the first cooling step being adapted to precipitating a first part of the lithium hydride having a first lithium isotope;
- a first separation step (124) adapted to separating the precipitated first part of the lithium hydride from the first mixture, forming a second mixture (122).

## Description

### Technical field

A method for isotopic separation of lithium isotopes is disclosed herein. In particular, the disclosed method is directed to the separation of lithium isotopes in a fluid medium based on phase change temperature differences.

### Background art

The world has a need for the separation of isotopes, mostly the separation of the lighter isotopes from the elements. In nuclear power applications, including fusion and fission, there is a need to separate the isotopes of lithium that occur in nature, lithium-6 (⁶Li) and lithium-7 (⁷Li). Naturally occurring lithium contains 7,4% of ⁶Li and 92,6% of ⁷Li.

In fusion for nuclear power generation, lithium is used to breed tritium, the primary fuel of a fusion power generator. Yet, the most commonly occurring isotope of lithium, ⁷Li, is a poor breeder of tritium due to its smaller cross section, so it is desirable to use ⁶Li for tritium breeding blankets. Because this isotope is much less common, enrichment of lithium is required. By enrichment, the percentage of ⁶Li in a sample increases. In solid breeders, the percentage may have to increase to between 30% and 60%; yet in liquid breeders, the percentage may have to go as high as 90%.

Lithium enrichment is useful in other applications. In power generators utilizing the principles of nuclear fission, ⁷Li at about 99% percent purity is used as a neutron absorber, to control the acidity, the neutron moderation and as a coolant in molten salt reactors.

The current demand for enriched lithium is increasing because Li-ion batteries work more efficiently with ⁶Li and is also expected to increase more in the following years, as fusion reactors become a reality.

Currently, enriched lithium is supplied by the stockpiles produced in the US between 1950 and 1970s using the expensive process known as COLEX. The market price for ⁶Li is at about 500 dollars per 10g, when considering that the amount required for a fusion power plant per giga watt of energy is in the order of 60 tons, this cost is prohibitive.

Presently, there seems to be no method that can produce the amount of enriched lithium that fusion power plants would require. In addition to that, the methods that have been developed suffer from two issues: they are very expensive, and they are highly pollutant to the environment.

Enriched lithium has been produced mainly by three methods, COLEX, OREX and ELEX. COLEX and OREX are chemical exchange processes based on counter-current flow of a LiOH or LiCl solution and a lithium amalgam. The enriched lithium is deposited on the amalgam phase. Methods based on the electrical properties of lithium have also been used. In the ELEX method, a lithium salt solution is electrolyzed using a mercury cathode in a counter-current flow.

In particular, the methods mentioned utilize mercury in some capacity. Between the 1950s and 1980s, these methods were used extensively to produce lithium in the United States. The COLEX process alone used about 24 million pounds of mercury. Although most of that mercury was properly dispatched of, about 2 million pounds have not been accounted for. The unaccounted-for mercury may have found its way into the environment and may be the cause of mercury pollution of several water bodies in east Virginia.

Current trends in separation or enrichment of lithium ions involve laser separation and electromagnetic separation. These methods are expensive and slow, and they also require very specific materials and equipment. The limitations of these methods have been noted by Dr.-Ing. Thomas Giegerich the Lead engineer for DEMO vacuum system developments. Dr.-Ing. Thomas Giegerich wrote in "Lithium enrichment issues in the sustainable supply chain of future fusion reactors" available at www.kit.edu, that it is proposed to develop mercury based methods further as the classical COLEX related methods have the highest quality value at the lowest development effort.

In U.S. Pat. No. 8,672,138 to Raizen et al. a vapor having several atoms of a single element is formed into a stream and then light waves are applied. The light waves are tuned to prepare specific isotopes to certain magnetic states. Then a magnetic field is applied that separates the isotopes according to their magnetic states. The method described is clearly based on both laser and electromagnetic methods that exploit these properties of isotopes. Methods like the one described by Raizen are unsuitable for lithium applications. They are inadequate because lithium isotopes in a fusion reactor must be separated as part of the power plant process. Because the element must be vaporized it is not easy to integrate this method with a fusion reactor process, where lithium may be either liquid or solid. A mayor issue with Raizen's method is that the temperatures the fusion process works at may not allow for every part of the method to work. In addition, the method may be too slow to accommodate the pace required by the fusion reactor. Also, because of the light wave equipment required by the method, which may need very specific temperatures to work as well as expensive components, it is not a very suitable method for a fusion power plant to rely upon for lithium enrichment.

Another method based on lasers is described in U.S. Pat. No. 4,149,077 to Yamashita et al. The laser, according to Yamashita, separates lithium isotopes by irradiating a lithium atomic beam with a beam tuned to the absorption lines of either isotope of lithium. This results in the ionization of that isotope which is then separated by means of a mass-filter, for example a mass spectrometer based on magnetic fields. This method suffers from needing lithium to be in a very specific state in order to operate, in this case a lithium atomic beam. Using this method in a fusion power plant, requires that the working lithium be removed from the process, treated, and then reinserted. This may cause additional heat losses, which, depending on the plant configuration, may not be easy to overcome. Further, they process may need to be stopped to prepare the lithium and then effect the separation, so it is not a method that would work properly as part of a fusion power plant process.

Processes based on electromagnetic properties of the isotopes and laser methods are also very hard and costly to scale, as they are either surface effects, or volumetric effects on atom or ion beams, necessarily in the gas or plasma state, and thus typically of lower density than liquids and solids. These processes also have very low energy efficiency which adds to the overall cost of the process. Considering that it has been noted by experts in the field that the current trends are limited to chemical separation methods using mercury like COLEX and methods that exploit the electromagnetic properties of the lithium isotopes; there is a need for lithium isotope separation methods, that are reliable, inexpensive, fast, good to the environment and that may work in collaboration with a fusion reactor process.

### Summary of Invention

One embodiment addresses all or some of the drawbacks of known methods for isotopic separating of lithium.

One embodiment provides a method for isotopic separation of lithium, the method comprising:
- providing a first mixture comprising at least lithium, lithium hydride, and possibly lithium deuteride and/or lithium tritide, the first mixture being at a first temperature;
- a first cooling step, preferably a uniform cooling, adapted to cooling the first mixture to a second temperature lower than the first temperature; the first cooling step being adapted to precipitating a first part of the lithium hydride having a first lithium isotope;
- a first separation step adapted to separating the precipitated first part of the lithium hydride from the first mixture, forming a second mixture.

In one embodiment, the method further comprises a first extraction step adapted to extracting the precipitated first part of the lithium hydride, after or during the first separation step.

In one embodiment, the method further comprises:
- a second cooling step, preferably a uniform cooling, adapted to cooling the second mixture to a third temperature lower than the second temperature; the second cooling step being adapted to precipitate a second part of the lithium hydride having the second lithium isotope; and
- a second separation step adapted to separating the precipitated second part of the lithium hydride from the second mixture, forming a third mixture.

In one embodiment, the method further comprises a second extraction step adapted to extracting the precipitated second part of the lithium hydride, after or during the second separation step.

In one embodiment, the first and/or the second cooling step is slow, for example has a cooling rate less than 1°C per minute.

In one embodiment, providing the first mixture comprises a heating step adapted to heating the first mixture to the first temperature.

In one embodiment, the method comprises repeating the providing step and repeating:
- the first cooling and separating steps, at least part of the second mixture being used as the first mixture; and/or
- the second cooling and separating steps, at least part of the third mixture being used as the first mixture.

In one embodiment, the first isotope is the ⁷Li isotope and the second isotope is the ⁶Li isotope.

In one embodiment:
- the first temperature is above about 410°C, for example above about 500°C;
- the second temperature is comprised between 390°C and 410°C, for example equal to about 400°C; and/or
- the third temperature is comprised between 388°C and 408°C, for example equal to about 398°C.

In one embodiment, at least one of the first and second separating steps comprises spinning the first and/or the second mixture, for example spinning a chamber containing said mixture.

One embodiment provides a device adapted to implement the method of any one of claims 1 to 10, wherein the device comprises:
- a chamber adapted to contain a mixture comprising at least lithium and lithium hydride; and
- a cooling mechanism adapted to cooling the mixture in the chamber.

In one embodiment, the cooling mechanism comprises a cooling jacket covering at least partially the chamber and means adapted to transport a coolant in the cooling jacket.

In one embodiment, the device further comprises a heating apparatus adapted to heating the mixture in the chamber, for example an ohmic heating or an inductive heating apparatus.

In one embodiment, the device further comprises rotating means adapted to spin the chamber, for example a shaft coupled to the chamber and to a motor located outside the chamber.

In one embodiment, the chamber is shaped in a way that allows for liquid or solid contents that accumulate at the bottom of said chamber to be discharged, for example a shape of a bell, an inverted bell or a diamond.

### Brief description of drawings

The foregoing features and advantages, as well as others, will be described in detail in the following description of specific embodiments given by way of illustration and not limitation with reference to the accompanying drawings, in which:
FIG. 1 is a diagram describing the method for the isotopic separation of lithium.
FIG. 2 is frontal view of a device that executes the method for the isotopic separation of lithium.
FIG. 3 is a phase diagram of the LiH mixture according to mole percentage.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

The figures are not to scale. It should be noted that the drawings refer to an embodiment of the disclosed method and device for isotopic separation of lithium, sometimes also referred simply as device or method, accordingly. Other embodiments may be possible, as someone with appropriate training may readily appreciate. The actual dimension and/or shape of each of the components of the embodiment may vary. Only important details of the embodiment are shown, however one of ordinary skill in the art can appreciate how the overall device may be constructed, without undue experimentation. Similarly, a person of ordinary skill may anticipate that steps of the method may be executed in a different order, according to the specific needs of the use. Some details have been omitted from the drawings, but the inventors believe that adding these details is unnecessary for the overall appreciation of the characteristics of the invention disclosed. These omitted details include, among others, elements for holding or fixing the device or its functional components. Some characteristics of the embodiment appear exaggerated to facilitate understanding. The embodiments disclosed, and alternatives observed should not be considered as limiting the invention in any way.

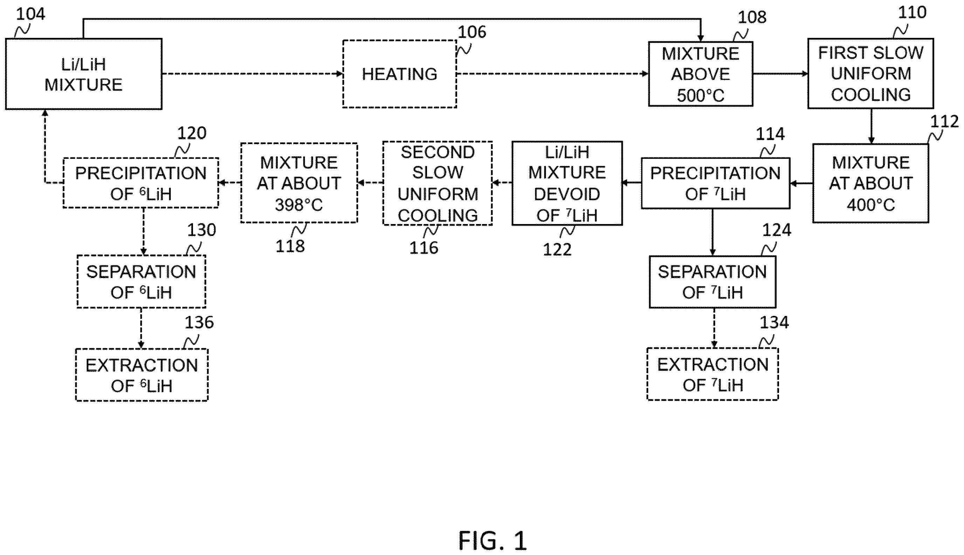

A diagram of an embodiment of a method for the isotopic separation of lithium is shown in FIG. 1. In this method the Li/LiH mixture **104** (first mixture) undergoes heating **106** step. After being heated the Li/LiH mixture **104** is at a first temperature above 500°C in the mixture above 500°C **108** step. Afterwards there is a first slow uniform cooling **110** step. The Li/LiH mixture **104** is then cooled, until the mixture reaches a second temperature of about 400°C in the mixture at about 400°C **112** step. This step leads to the precipitation of the first lithium isotope as part of an hydrogen compound ⁷LiH, this step may be called precipitation of ⁷LiH **114.** At this point the process may be divided into two branches. The first branch leads to the separation of ⁷LiH from the rest of the Li/LiH mixture **104** in the separation of ⁷LiH **124** step. The rest of the Li/LiH mixture **104** (devoid of ⁷LiH) may be called the second Li/LiH mixture **122.** After ⁷LiH is distinctively separated, it can then be extracted in the extraction of ⁷LiH **134** step. The other branch deals with cooling the second Li/LiH mixture **122** in a second slow uniform cooling **116** step. The second Li/LiH mixture **122** is cooled until the mixture reaches a third temperature in the mixture at about 398°C **118** step. At this temperature, precipitation of the other lithium isotope initiates, as part of the hydrogen compound ⁶LiH. This stage is called precipitation of ⁶LiH **120.** Once again, at this stage, two different branches may be followed. In a first branch the isotope is separated in the separation of ⁶LiH **130** step. Once the isotope is separated, it can then be extracted in the extraction of ⁶LiH **136** step. The other branch is the reformation of the Li/LiH mixture **104,** and the process may be restarted, or the formation of a third Li/LiH mixture that can serve as the first mixture in repetition of the process.

Alternatively, the process can be restarted after the precipitation of ⁷LiH **114** and after obtaining the second Li/LiH mixture **122,** but without proceeding with the branch that deals with its second cooling and leads to precipitation of ⁶LiH **120.**

When reference is made to a uniform cooling (or uniformly cooled), this is directed to a cooling which is substantially uniform in the whole volume of the mixture, and when reference is made to a slow cooling, this is directed to the cooling rate, which is for example less than 1°C per minute.

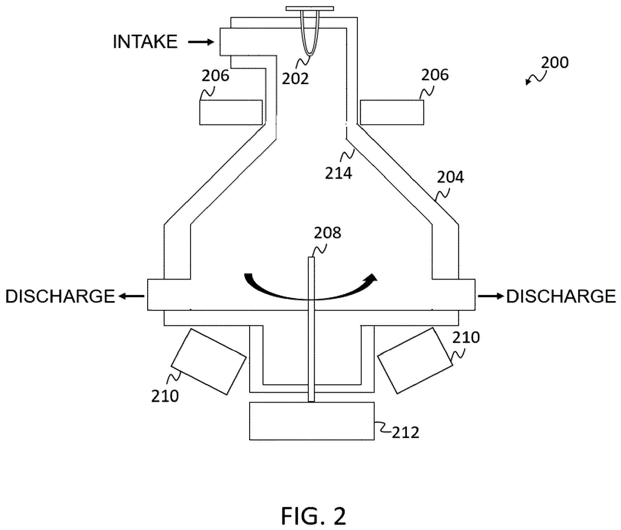

An embodiment of a device that may reproduce the method from FIG. 1 is shown in FIG. 2. The device is comprised of a chamber **214,** the chamber **214** has an intake on top and a discharge on bottom. The device has heating means, which may be described as a coil **202** for ohmic heating, but may also be another kind of heating mechanism like an inductive heating coil. In order to center the device, centering magnets **206** may be positioned near the top of the device. The device may also be lifted for which lifting magnets **210** may also be fashioned. A motor **212** is coupled, for example connected, to a shaft **208.** The shaft **208** is coupled, for example connected, to the chamber **214,** so that the chamber **214** may spin. The device may be covered by a cooling jacket **204.** The cooling jacket **204** may include means for transporting a coolant so that it may cool the interior of the chamber **214.**

### Example of operation

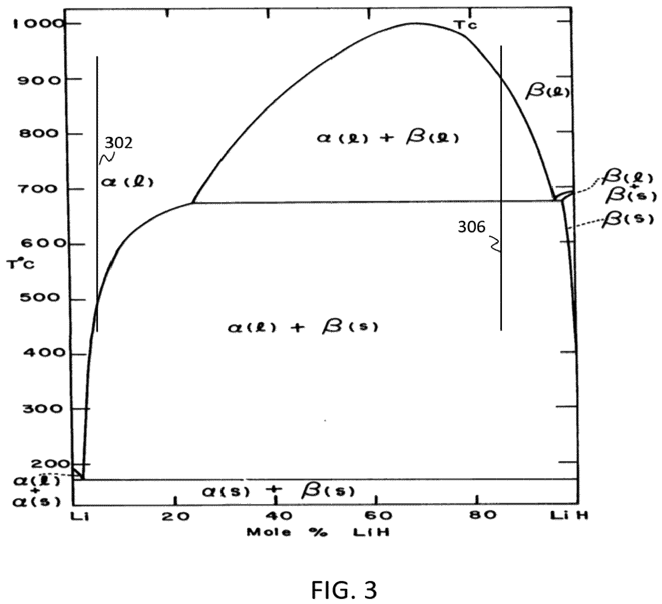

The method described by the diagram in FIG. 1 may be accommodated to work with mixtures composed of lithium and lithium hydrides in different molal compositions according to the phase diagram in FIG. 3. Two trajectories are identified as being meaningful for the operation of this method. It should not be understood that these two trajectories are limiting. A person of ordinary skill in the art should be able to determine the best molal composition according to the needs of a specific use of the method. A first trajectory **302** starts with the Li/LiH mixture **104** from FIG. 1 in a molal composition of about 5% it is at or above 500°C in an alfa liquid phase. When the Li/LiH mixture **104** is cooled below 500°C it separates into a liquid, alfa phase and a solid, beta phase. A second trajectory **306** may start with the Li/LiH mixture **104** at about 80% molal composition and at a temperature above 900°C. As the Li/LiH mixture **104** is cooled, it splits into two distinctive liquid phases, alfa and beta. When cooled further the beta phase solidifies. Alfa phase is rich in Li (and ⁶LiH, if the cooling is uniform and stopped at the precipitation temperature for ⁷LiH, without reaching the precipitation temperature for ⁶LiH). Beta phase is rich in LiH (or, more specifically, in ⁷LiH, if the cooling is uniform and stopped at the precipitation temperature for ⁷LiH, without reaching the precipitation temperature for ⁶LiH).

A first embodiment of the device **200** for the isotopic separation of lithium shown in FIG. 2 may execute the steps of the method from FIG 1, in the following manner. The Li/LiH mixture **104** is deposited into the device chamber **214** from the intake at the top of the device. The Li/LiH mixture **104** may then be heated through the heating coil **202.** Once the Li/LiH mixture **104** is in the mixture above 500°C **108** step, the cooling jacket **204** may be used to cool down the Li/LiH mixture **104** during the first slow uniform cooling **110** or the second slow uniform cooling **116** steps. For the separation of the isotopes the chamber **214** may spin. As the chamber **214** is coupled to the motor **212** by means of the shaft **208,** when the motor **212** operates, the chamber **214** spins. The spinning of the chamber **214** may be used to cause separation of the Li/LiH mixture **104,** using effects like density difference, into the constituent phases, alfa and beta, of the Li/LiH mixture **104.** In other words, beta phase, richer in ⁷LiH, is denser and thus accumulates at outer radii, when subject to centrifugal forces. This embodiment of the device is shaped in a way that allows for the liquid or solid contents of the chamber **214** that accumulate at the bottom to be discharged. This function of the shape may be achieved through other means or through different shapes. For instance, in another embodiment the shape could be described as a bell, an inverted bell, a diamond, or some other shape that allows for accumulation of solid or liquid material at the bottom.

Other devices may be used to execute the steps of the method according to the embodiments. Another example of device is given in European patent application number EP22305438, filed on April 4, 2022 by the same applicant "RENAISSANCE FUSION", entitled "DEVICE AND METHOD FOR EXTRACTION OF LITHIUM HYDRIDES", which is hereby incorporated by reference to the maximum extent allowable by law. In addition, the method, or at least some of the steps of the method, described in the above-mentioned application may be used to separate lithium from lithium hydride, after the isotopic separation of lithium.

Example embodiments of the invention are summarized here. Other embodiments can also be understood from the entirety of the specification as well as the claims filed herein.

Example 1. A method for isotopic separation of lithium, the method comprising:
- providing a first mixture (104) comprising at least lithium, lithium hydride, and possibly lithium deuteride and/or lithium tritide, the first mixture being at a first temperature;
- a first cooling step (110), preferably a uniform cooling, adapted to cooling the first mixture to a second temperature lower than the first temperature; the first cooling step being adapted to precipitating a first part of the lithium hydride having a first lithium isotope;
- a first separation step (124) adapted to separating the precipitated first part of the lithium hydride from the first mixture, forming a second mixture (122).

Example 2. The method according to example 1, wherein the method further comprises a first extraction step (134) adapted to extracting the precipitated first part of the lithium hydride, after or during the first separation step (124) .

Example 3. The method according to example 1 or 2, wherein the method further comprises:
- a second cooling step (116), preferably a uniform cooling, adapted to cooling the second mixture (122) to a third temperature lower than the second temperature; the second cooling step being adapted to precipitate a second part of the lithium hydride having the second lithium isotope; and
- a second separation step (130) adapted to separating the precipitated second part of the lithium hydride from the second mixture, forming a third mixture.

Example 4. The method according to example 3, wherein the method further comprises a second extraction step (136) adapted to extracting the precipitated second part of the lithium hydride, after or during the second separation step (130) .

Example 5. The method according to any one of examples 1 to 4, wherein the first and/or the second cooling step is slow, for example has a cooling rate less than 1°C per minute.

Example 6. The method according to any one of examples 1 to 5, wherein providing the first mixture (104) comprises a heating step (106) adapted to heating the first mixture to the first temperature.

Example 7. The method according to any one of examples 1 to 6, wherein the method comprises repeating the providing step and repeating:
- the first cooling and separating steps, at least part of the second mixture being used as the first mixture; and/or
- the second cooling and separating steps, at least part of the third mixture being used as the first mixture.

Example 8. The method according to any one of examples 1 to 7, wherein the first isotope is the ⁷Li isotope and the second isotope is the ⁶Li isotope.

Example 9. The method according to any one of examples 1 to 8, wherein:
- the first temperature is above about 410°C, for example above about 500°C;
- the second temperature is comprised between 390°C and 410°C, for example equal to about 400°C; and/or
- the third temperature is comprised between 388°C and 408°C, for example equal to about 398°C.

Example 10. The method according to any one of examples 1 to 9, wherein at least one of the first and second separating steps comprises spinning the first and/or the second mixture, for example spinning a chamber (214) containing said mixture.

Example 11. A device (200) adapted to implement the method of any one of examples 1 to 10, wherein the device comprises:
- a chamber (214) adapted to contain a mixture (104) comprising at least lithium and lithium hydride; and
- a cooling mechanism adapted to cooling the mixture in the chamber.

Example 12. The device according to example 11, wherein the chamber (214) comprises an intake on a top portion and a discharge on a bottom portion.

Example 13. The device according to example 11 or 12, wherein the cooling mechanism comprises a cooling jacket (204) covering at least partially the chamber and means adapted to transport a coolant in the cooling jacket.

Example 14. The device according to any one of examples 11 to 13, further comprising a heating apparatus (202) adapted to heating the mixture in the chamber, for example an ohmic heating or an inductive heating apparatus.

Example 15. The device according to any one of examples 11 to 14, further comprising rotating means adapted to spin the chamber, for example a shaft (208) coupled to the chamber and to a motor (212) located outside the chamber.

Example 16. The device according to any one of examples 11 to 15, wherein the chamber (214) is shaped in a way that allows for liquid or solid contents that accumulate at the bottom of said chamber to be discharged, for example a shape of a bell, an inverted bell or a diamond.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

List of acronyms:
- ⁶Li:: Lithium-6
- ⁷Li:: Lithium-7
- COLEX:: Column exchange
- OREX:: Organic exchange
- ELEX:: Electro-exchange
- LiOH:: Lithium hydroxide
- LiCl:: Lithium chloride
- DEMO:: DEMOnstration Power Plant
- LiH:: Lithium hydride
- Li:: Lithium
- ⁷LiH:: Lithium-7 hydride
- ⁶LiH:: Lithium-6 hydride

## Claims

1. A method for isotopic separation of lithium, the method comprising:
- providing a first mixture (104) comprising at least lithium, lithium hydride, and possibly lithium deuteride and/or lithium tritide, the first mixture being at a first temperature;
- a first cooling step (110), preferably a uniform cooling, adapted to cooling the first mixture to a second temperature lower than the first temperature; the first cooling step being adapted to precipitating a first part of the lithium hydride having a first lithium isotope;
- a first separation step (124) adapted to separating the precipitated first part of the lithium hydride from the first mixture, forming a second mixture (122).

2. The method according to claim 1, wherein the method further comprises a first extraction step (134) adapted to extracting the precipitated first part of the lithium hydride, after or during the first separation step (124).

3. The method according to claim 1 or 2, wherein the method further comprises:
- a second cooling step (116), preferably a uniform cooling, adapted to cooling the second mixture (122) to a third temperature lower than the second temperature; the second cooling step being adapted to precipitate a second part of the lithium hydride having the second lithium isotope; and
- a second separation step (130) adapted to separating the precipitated second part of the lithium hydride from the second mixture, forming a third mixture.

4. The method according to claim 3, wherein the method further comprises a second extraction step (136) adapted to extracting the precipitated second part of the lithium hydride, after or during the second separation step (130).

5. The method according to any one of claims 1 to 4, wherein the first and/or the second cooling step is slow, for example has a cooling rate less than 1°C per minute.

6. The method according to any one of claims 1 to 5, wherein providing the first mixture (104) comprises a heating step (106) adapted to heating the first mixture to the first temperature.

7. The method according to any one of claims 1 to 6, wherein the method comprises repeating the providing step and repeating:
- the first cooling and separating steps, at least part of the second mixture being used as the first mixture; and/or
- the second cooling and separating steps, at least part of the third mixture being used as the first mixture.

8. The method according to any one of claims 1 to 7, wherein the first isotope is the ⁷Li isotope and the second isotope is the ⁶Li isotope.

9. The method according to any one of claims 1 to 8, wherein:
- the first temperature is above about 410°C, for example above about 500°C;
- the second temperature is comprised between 390°C and 410°C, for example equal to about 400°C; and/or
- the third temperature is comprised between 388°C and 408°C, for example equal to about 398°C.

10. The method according to any one of claims 1 to 9, wherein at least one of the first and second separating steps comprises spinning the first and/or the second mixture, for example spinning a chamber (214) containing said mixture.

11. A device (200) adapted to implement the method of any one of claims 1 to 10, wherein the device comprises:
- a chamber (214) adapted to contain a mixture (104) comprising at least lithium and lithium hydride; and
- a cooling mechanism adapted to cooling the mixture in the chamber.

12. The device according to claim 11, wherein the cooling mechanism comprises a cooling jacket (204) covering at least partially the chamber and means adapted to transport a coolant in the cooling jacket.

13. The device according to claim 11 or 12, further comprising a heating apparatus (202) adapted to heating the mixture in the chamber, for example an ohmic heating or an inductive heating apparatus.

14. The device according to any one of claims 11 to 13, further comprising rotating means adapted to spin the chamber, for example a shaft (208) coupled to the chamber and to a motor (212) located outside the chamber.

15. The device according to any one of claims 11 to 14, wherein the chamber (214) is shaped in a way that allows for liquid or solid contents that accumulate at the bottom of said chamber to be discharged, for example a shape of a bell, an inverted bell or a diamond.
